# EUROPEAN PATENT SPECIFICATION

(11) **EP 3 577 430 B1**
(45) Date of publication and mention of the grant of the patent: **07.06.2023**
(21) Application number: 18811945.7
(22) Date of filing: 05.04.2018
(51) Int. Cl.: G01M 13/022, G01L 5/00

(54) **AN APPARATUS AND A METHOD FOR MEASURING JOINT STIFFNESS**
VORRICHTUNG UND VERFAHREN ZUR MESSUNG DER GELENKSTEIFIGKEIT
APPAREIL ET PROCÉDÉ DE MESURE DE LA RIGIDITÉ DE JOINTS

(30) Priority: 05.04.2017 TR 201705129
(43) Date of publication of application: 11.12.2019
(73) Proprietor: Tirsan Kardan Sanayi Ve Ticaret Anonim Sirketi, Yunusemre - Manisa (TR)
(72) Inventor: TASAN, Korkut, Manisa (TR)
(74) Representative: Yamankaradeniz, Kemal
(86) International application number: PCT/TR2018/050145
(87) International publication number: WO 2019/009856

(56) References cited:
- GB-A- 2 233 771
- GB-A- 2 259 994
- JP-A- H0 882 327
- US-A- 5 197 339
- US-A1- 2008 277 553

## Description

### Technical Field

The invention relates to measuring the tightness of cardan joints, which are employed in cardan shafts that transmit the rotational motion and torque in general motor vehicles, and which are used to set a certain angular difference between the axes of rotation of the shafts while transmitting the torque.

### Background Art

It is important for joints to maintain a certain level of tightness during manufacturing and later operational life in terms of effectiveness and lifetime. Tighter or looser cardan joints than required lead to a number of problems. These problems are;
- Wearing of bearing joints and shortened lifetime as a consequence,
- Noise and vibration generation,
- Overheated joints,
- Not being able to properly balance the cardan shaft,
- Corrosion on trunnion surfaces of the universal joint,
- Ingress of foreign matter such as dust, water, snow etc. into the joint,
- Grease loss.

Therefore, it is important to measure the joint stiffness and assess if an appropriate tightness level is achieved. In prior applications, joint stiffness inspection is performed by placing the cardan shaft on an inspection bench and performing measurements using a torquemeter as an apparatus. The apparatus performs tightness measurements after attaching the apparatus to the cardan shaft and applying torque by means of the torquemeter. A single value is read from the torquemeter. Each line of cardan shafts has its own joint stiffness range. If the measured value read from the torquemeter is within this predefined range, then the tightness is suitable. This process is not suitable for serial production since it requires a relative long inspection duration. In addition, the inspection becomes difficult since the operator has to place the cardan shaft on the inspection bench and take a reading through the torquemeter after attaching the apparatus. Furthermore, another disadvantage is the high cost of the used inspection device and required qualification for operation.

GB2233771A discloses a method and apparatus of measuring the bearing play of a universal joint journal bearing with four mutually perpendicular journals, involving measuring the bending moment opposing the bending of a linkage yoke with respect to another, fixed linkage yoke.

US5197339A discloses a device and method for checking the torque of a journal cross and bearings combination. The device comprises means for clamping a universal joint, means connectable to the clamping means and through which torque is applied to the universal joint, the connecting means having means for sensing the amount of torque required to rotate the cross-member and for measuring the amount of torque sensed.

Therefore, requirement for an apparatus intended to be used for inspecting tightness of joints in cardan shafts in a cheap and a practical way that allow 100% inspection even during serial production, and method related thereto, and lack of an adequate solution to the problem have made it necessary to make a development in the related technical field.

### Object of the Invention

The present invention relates to an apparatus and a method for tightness measurement which meet all of the aforementioned requirements, overcome all of the disadvantages and provide further advantages.

The main object of the apparatus and the method for tightness measurement is to allow application of varying and increasing amount of torque by means of a weight which is able to carry out bidirectional motion on an extension connected with the cardan joint, and measuring the tightness level based on the vertical motion of the joint. The portable structure of the apparatus allows it to be moved easily to any desired location and allows tightness measurements to be performed directly at the site of the cardan shaft. It is low cost due to being composed of simple elements and does not require additional training for its operation. Therefore, it can be easily operated by any personnel. It becomes possible to accomplish the inspection in a short time period and hence it provides the advantage of shortening the inspection duration during serial production.

The provided apparatus and method inspects the product with respect a range within a lower and an upper limit. The lower limit inspection gauge (non-drop gauge) is used to check the minimum specification value of the joint stiffness. The gauge is expected not to move the joint at the lower limit value with its weight. The upper limit inspection gauge (drop gauge) is used to check the maximum specification value of the joint stiffness. The gauge is expected to move the joint at the upper limit value with its weight. On the other hand, the present inspection devices measure a single value, instead of checking within an range. The developed apparatus and method allows performing a one hundred percent joint stiffness. The required torque level for each product thus can be set by means of the moving gauge introduced on the joint stiffness inspection gauge.

In order to achieve the aforementioned objectives, a tightness measurement apparatus which are positioned on the connector yokes of cardan shafts, which are used to transmit the rotational motion and the torque, in order to allow low-cost, practical and rapid measurement of tightness levels of cardan joints. The developed tightness measurement apparatus comprises at least one housing which is positioned on the connector yoke, an extension which is connected to the housing, and at least one weight which engages to the extension and able to perform bidirectional motion thereon. Furthermore, the tightness measurement method, where the tightness measurement apparatus is used, comprises the process steps of
assembling where the housing is fixed to the end connector yoke,
positioning where the end connector yoke is rotated by the cardan joint to an initial state,
fastening where the weight is brought to its initial position on the extension,
sliding where the weight is moved on the extension in the direction away from/towards the end connector yoke,
and the second detection where the instance of initiating rotation about the joint axis due to the torque applied by the weight on the cardan joint is observed.

The structural and characteristic features of the invention with all of its advantages shall become apparent with the appended drawings and the detailed description with reference to those drawings, therefore, assessment should be based on these drawings and the detailed description. The joint stiffness measurement apparatus and method of the invention is also suitable for use with other machinery and systems where similar moment and rotational motion applications are present, in addition to the cardan shafts intended to be used in vehicles.

### Brief Description of Drawings

The embodiment of the invention with its further elements and advantages shall become apparent with the appended drawings described below.
- Figure - 1:: A perspective view of the cardan shaft to which the tightness measurement apparatus of the invention will be connected.
- Figure - 2:: A perspective view of the tightness measurement apparatus of the invention when it is connected to a cardan shaft.
- Figure - 3:: A front view of the tightness measurement apparatus of the invention when it is connected to a cardan shaft.
- Figure - 4:: A top view of a cross section of the end portion of the cardan shaft to which the tightness measurement apparatus of the invention is connected.
- Figure - 5:: A top view of a cross section of the tightness measurement apparatus of the invention when it is connected to a cardan shaft.
- Figure - 6:: A two dimensional side view of the tightness measurement apparatus of the invention.

### Parts References

| | | | |
|---|---|---|---|
| 10 | Cardan Shaft | k, k' | Joint axis |
| 11' | Connector yoke | A | Tightness measurement method |
| 12 | Cardan joint | B | Assembling |
| 20 | Tightness measurement apparatus | C | Positioning |
| 21 | Housing | D1 | First detection |
| 22 | Extension | E | Fastening |
| 22.1 | Ruler | F | Sliding |
| 23 | Weight | D2 | Second detection |
| 24 | Connector | | |
| 25 | Motion bearing | | |

### Detailed Description of the Invention

The tightness measurement apparatus (20); developed with the invention is positioned on the end connector yoke (11'), which is one of the elements composing the cardan joint of cardan shafts (10), in order to allow low cost, practical and rapid measurement of tightness levels of cardan joints (12). In order to accomplish this, the tightness measurement apparatus (20) comprises at least one housing (21) which is fixed to the end connector yoke (11'), at least one extension (22) which is connected to said housing (21), and at least one weight (23) which engages to the extension (22) and is able to perform bidirectional motion thereon.

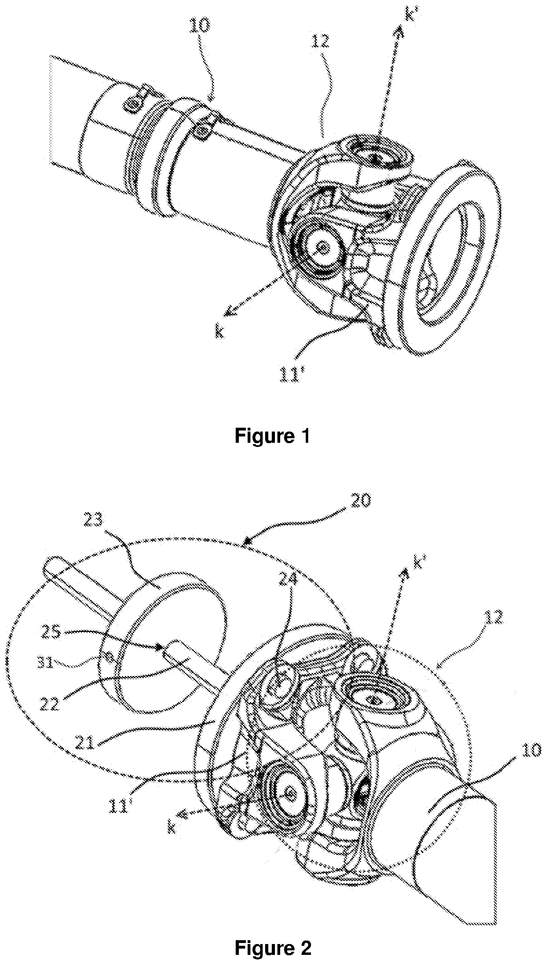

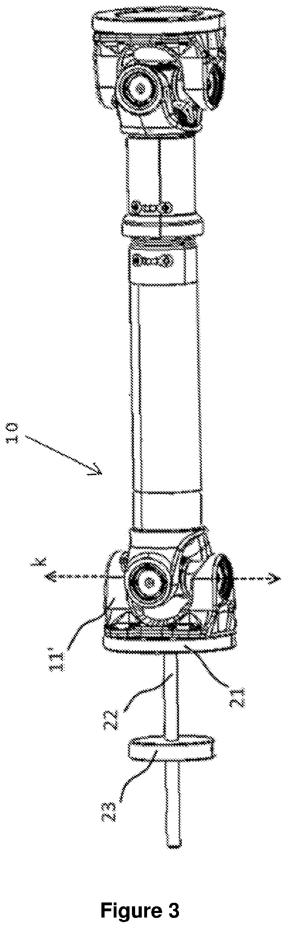

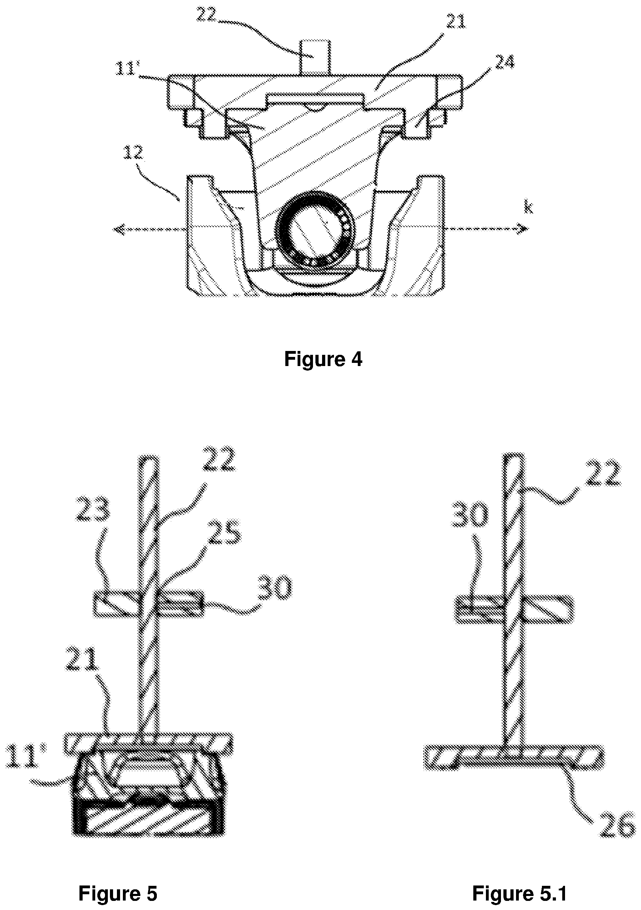

Figures 2 and 3 give perspective and front views of the entire structure respectively, when the tightness measurement apparatus (20) is connected to the cardan shaft (10). The housing (21) is connected to the end connector yoke (11') via connectors (24). The connectors (24) are preferably multitude of pin structures in protrusion form. They are connected to the housing (21) via the extension (22) which preferably has a cylindrical form. In this connection, the angle between the extension (22) and the housing (21) is 90 degrees. The fixing in this configuration is established through a threaded connection or a snapping connection. A motion bearing (25) introduced on the weight (23) allows it to be positioned on the extension (22) by engaging thereto and allows motion thereon. The motion bearing (25) matches the form of the extension (22). Figure 4 shows a top view of the end connector yoke to which the tightness measurement apparatus (20) is connected, while Figure 5 shows a top view of a cross section of the tightness measurement apparatus (20) while it is connected to the cardan shaft (10). Positioning steps or a ruler (22.1) is further formed on the mentioned extension (22). Positioning steps or the ruler (22.1) allows rapid access to torque values of different types of cardan shafts (10). Therefore, it becomes possible to measure torque values of different cardan shafts (10) by using a single product.

The tightness measurement method (A) performed using the tightness measurement apparatus (20) comprises two measurements. First one is the measurement which is performed with the housing (21) and through which the minimum torque value that the cardan joint (12) should have is determined. The lower limit inspection gauge (non-drop gauge) is used to determine the minimum specification value of the joint stiffness. The gauge is expected not to move the joint at the lower limit value with its weight. The other one used to determine the maximum torque value that the cardan joint (12) should have. The upper limit inspection gauge (drop gauge) is used to check the maximum specification value of the joint stiffness. The gauge is expected to move the joint at the upper limit value with its weight. Thereby, a range between the minimum and maximum tightness values of the mentioned cardan joint (12) is defined.

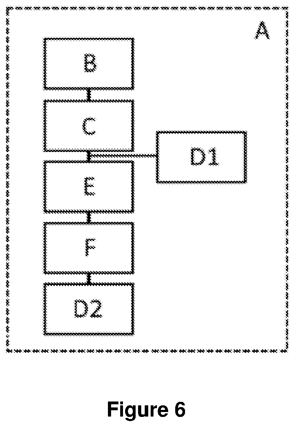

The schematic representation of the method should also be demonstrated for the case when sliding is not possible. The tightness measurement method (A) represented schematically in Figure 6 essentially comprises the stages of; assembling (B) where the housing (21) is fixed to the end connector yoke (11'), positioning (C) where the end connector yoke (11') is rotated by the cardan joint (12) to its initial state, fastening (E) where the weight (23) is brought to its initial position on the extension (22), sliding (F) where the weight (23) is moved on the extension (22) in the direction away from the end connector yoke (1 1'), and the second detection (D2) where the instance of initiating rotation about the joint axis (k, k') due to the torque applied by the weight (23) on the cardan joint (12) is observed in order to determine the maximum torque value that the cardan joint (12) should have. The tightness measurement method (A) in this configuration gives the maximum value of the torque that the cardan joint (12) should have. A first detection (D1) stage may be added after the positioning (C) stage before mounting to the extension (22) when the minimum value is desired to be measured.

In the configuration, the joint axis (k, k') of the cardan joint (12) whose tightness to be measured should be parallel to the ground.

## Claims

1. A tightness measurement apparatus (20) for measuring the tightness of cardan joints (12), by being attached to an end connector yoke (11') of cardan shafts (10), **characterized in** comprising;
- a housing (21) which is adapted to be fixed to said end connector yoke (11'),
- an extension (22) which is connected to said housing (21) through a single piece or a modular structure,
**characterized by**
- a weight (23) which engages to the extension (22) and which is mobile or fixed thereon,
- positioning steps or a ruler (22.1) introduced on said extension (22)

2. A tightness measurement apparatus (20) according to Claim 1, **characterized in** comprising a multitude of connectors (24) in the form of extensions in order to allow the fixing between said housing (21) and the end connector yoke (11')

3. A tightness measurement apparatus (20) according to Claim 1, **characterized in** comprising an extension (22) which is fixed to the center of said housing (21) at a 90 degrees angle by means of a threaded connection or a snapping connection.

4. A tightness measurement apparatus (20) according to Claim 1, **characterized in** comprising at least one motion bearing (25) introduced on said weight (23) in order to engage to the extension (22) and allow it to move thereon.

5. A tightness measurement apparatus (20) according to Claim 4, **characterized in that** said extension (22) has a matching geometry with the motion bearing (25) on the weight (23).

6. A tightness measurement method (A) for tightness measurements of cardan joints (12), which are used to transmit the torque in motor vehicles and which are used to set a certain angular difference between the axes of rotation of cardan shafts (10) while transmitting the torque, using an apparatus according to claim 1, being attached to the end connector yoke (11') of the cardan shaft (10), **characterized in** comprising the process steps of
- assembling (B) the housing (21) to the end connector yoke (11'),
- positioning (C) the end connector yoke (11') by rotating it with the cardan joint (12),
- fastening (E) the weight (23) by bringing it to an initial position on the extension (22),
- sliding (F) the weight (23) by moving it on the extension (22) in the direction away from the end connector yoke (11'),
- the second detection (D2) where the instance of initiating rotation about the joint axis (k, k') due to the torque applied by the weight (23) on the cardan joint (12) is observed in order to determine the maximum torque value that the cardan joint (12) should have.

7. A tightness measurement method (A) according to Claim 6, **characterized in** comprising a first detection (D1) step after the positioning (C) step and before mounting to the extension (22), wherein the minimum value of the required torque that the cardan joint (12) should have is desired to be measured.

8. A tightness measurement method (A) according to Claim 7, **characterized in that** the joint axis (k, k') of the cardan joint (12) whose tightness to be measured is positioned parallel to a horizontal surface.

## Patentansprüche

1. Spannungsmessvorrichtung (20) zum Messen der Spannung von Kardangelenken (12), indem sie an einer Endverbindergabel (11') von Kardanwellen (10) angebracht wird, **dadurch gekennzeichnet, dass** sie Folgendes umfasst,
- ein Gehäuse (21), das angepasst ist, um an der Endverbindergabel (11') fixiert zu werden,
- eine Verlängerung (22), die durch eine einziges Stück oder eine modulare Struktur mit dem Gehäuse (21) verbunden ist, **gekennzeichnet durch**
- ein Gewicht (23), das an der Verlängerung (22) eingreift und daran beweglich oder fixiert ist,
- Positionierungsstufen oder ein Lineal (22.1), die/das an der Verlängerung (22) eingeführt sind/ist.

2. Spannungsmessvorrichtung (20) nach Anspruch 1, **dadurch gekennzeichnet, dass** sie eine Mehrzahl von Verbindern (24) in Form von Verlängerungen umfasst, um das Fixieren zwischen dem Gehäuse (21) und der Endverbindergabel (11') zu ermöglichen.

3. Spannungsmessvorrichtung (20) nach Anspruch 1, **dadurch gekennzeichnet, dass** sie eine Verlängerung (22) umfasst, die mittels einer Gewindeverbindung oder einer Schnappverbindung in einem Winkel von 90 Grad an der Mitte des Gehäuses (21) fixiert ist.

4. Spannungsmessvorrichtung (20) nach Anspruch 1, **dadurch gekennzeichnet, dass** sie mindestens ein Bewegungslager (25) umfasst, das an dem Gewicht (23) eingeführt ist, um mit der Verlängerung (22) in Eingriff zu kommen und es ihr zu ermöglichen, sich darauf zu bewegen.

5. Spannungsmessvorrichtung (20) nach Anspruch 4, **dadurch gekennzeichnet, dass** die Verlängerung (22) eine zu dem Bewegungslager (25) an dem Gewicht (23) passende Geometrie aufweist.

6. Spannungsmessverfahren (A) für Spannungsmessungen von Kardangelenken (12), die zur Übertragung des Drehmoments in Kraftfahrzeugen verwendet werden und dazu verwendet werden, eine gewisse Winkeldifferenz zwischen den Drehachsen von Kardanwellen (10) einzustellen, während des Übertragens des Drehmoments unter Verwendung einer Vorrichtung nach Anspruch 1, die an der Endverbindergabel (11') der Kardanwelle (10) angebracht ist, **dadurch gekennzeichnet, dass** es die folgenden Prozessschritte umfasst
- Montieren (B) des Gehäuses (21) an der Endverbindergabel (11'),
- Positionieren (C) der Endverbindergabel (11'), indem sie mit dem Kardangelenk (12) gedreht wird,
- Befestigen (E) des Gewichts (23), indem es in eine Ausgangsposition auf der Verlängerung (22) gebracht wird,
- Schieben (F) des Gewichts (23) durch Bewegen davon auf der Verlängerung (22) in Richtung von der Endverbindergabel (11') weg,
- die zweite Erfassung (D2), bei welcher der Fall der Einleitung einer Drehung um die Gelenkachse (k, k') aufgrund des durch das Gewicht (23) auf das Kardangelenk (12) ausgeübten Drehmoments beobachtet wird, um den maximalen Drehmomentwert zu bestimmen, den das Kardangelenk (12) aufweisen sollte.

7. Spannungsmessverfahren (A) nach Anspruch 6, **dadurch gekennzeichnet, dass** es einen ersten Schritt der Erfassung (D1) nach dem Schritt des Positionierens (C) und vor dem Montieren an der Verlängerung (22) umfasst, wobei gewünscht wird, dass der Mindestwert des erforderlichen Drehmoments, den das Kardangelenk (12) aufweisen sollte, gemessen wird.

8. Spannungsmessverfahren (A) nach Anspruch 7, **dadurch gekennzeichnet, dass** die Gelenkachse (k, k') des Kardangelenks (12), dessen Spannung zu messen ist, parallel zu einer horizontalen Fläche positioniert wird.

## Revendications

1. Appareil de mesure de serrage (20) destiné à mesurer le serrage de joints de cardan (12), en étant attaché à une chape de connecteur d'extrémité (11') des arbres à cardan (10), caractérisé en comprenant ;
- un logement (21) qui est adapté pour être fixé à ladite chape de connecteur d'extrémité (11'),
- une extension (22) qui est reliée audit logement (21) par une pièce unique ou une structure modulaire, **caractérisé par**
- un poids (23) qui se met en prise avec l'extension (22) et qui est mobile ou fixe sur celui-ci,
- des marches de positionnement ou une règle (22.1) introduite sur ladite extension (22).

2. Appareil de mesure de serrage (20) selon la revendication 1, caractérisé en comprenant une multitude de connecteurs (24) sous forme d'extensions afin de permettre la fixation entre ledit logement (21) et la chape de connecteur d'extrémité (11').

3. Appareil de mesure de serrage (20) selon la revendication 1, caractérisé en comprenant une extension (22) qui est fixée au centre dudit logement (21) à un angle de 90 degrés au moyen d'une connexion filetée ou d'une connexion à encliquetage.

4. Appareil de mesure de serrage (20) selon la revendication 1, caractérisé en comprenant au moins un palier à mouvement (25) introduit sur ledit poids (23) afin de se mettre en prise sur l'extension (22) et lui permettre de se déplacer sur celui-ci.

5. Appareil de mesure de serrage (20) selon la revendication 4, **caractérisé en ce que** ladite extension (22) comporte une géométrie correspondante avec le palier à mouvement (25) sur le poids (23).

6. Procédé de mesure de serrage (A) pour les mesures de serrage des joints de cardan (12), qui sont utilisés pour transmettre le couple dans les véhicules à moteur et qui sont utilisés pour établir une certaine différence angulaire entre les axes de rotation des arbres à cardan (10) tout en transmettant le couple, à l'aide d'un appareil selon la revendication 1, attaché à la chape de connecteur d'extrémité (11') de l'arbre à cardan (10), caractérisé en comprenant les étapes de procédé de
- assemblage (B) du logement (21) à la chape de connecteur d'extrémité (11'),
- positionnement (C) de la chape de connecteur d'extrémité (11') en la faisant tourner avec le joint de cardan (12),
- fixation (E) du poids (23) en l'amenant dans une position initiale sur l'extension (22),
- coulissement (F) du poids (23) en le déplaçant sur l'extension (22) dans le sens s'éloignant de la chape de connecteur d'extrémité (1 1'),
- la seconde détection (D2) où le cas du déclenchement de la rotation autour de l'axe de joint (k, k') dû au couple appliqué par le poids (23) sur le joint de cardan (12) est observé afin de déterminer la valeur de couple maximale que le joint de cardan (12) doit comporter.

7. Procédé de mesure de serrage (A) selon la revendication 6, caractérisé en comprenant une première étape de détection (D1) après l'étape de positionnement (C) et avant le montage sur l'extension (22), ladite valeur minimale du couple requis que le joint de cardan (12) doit comporter devant être mesurée.

8. Procédé de mesure de serrage (A) selon la revendication 7, **caractérisé en ce que** l'axe de joint (k, k') du joint de cardan (12) dont le serrage doit être mesuré est positionné parallèlement à une surface horizontale.
